# EUROPEAN PATENT SPECIFICATION

(11) **EP 2 044 505 B1**
(45) Date of publication and mention of the grant of the patent: **16.01.2019**
(21) Application number: 07810222.5
(22) Date of filing: 06.07.2007
(51) Int. Cl.: G06F 3/0482, H04M 1/23, G06F 3/0483, G06F 3/0488, G06F 3/0481, H04M 1/725

(54) **TRACKBALL SYSTEM AND METHOD FOR A MOBILE DATA PROCESSING DEVICE**
ROLLKUGELSYSTEM UND VERFAHREN FÜR EIN MOBILES DATENVERARBEITUNGSGERÄT
SYSTÈME DE BOULE DE POINTAGE ET PROCÉDÉ POUR UN DISPOSITIF DE TRAITEMENT DE DONNÉES MOBILE

(30) Priority: 10.07.2006 US 484105; 10.07.2006 US 484237
(43) Date of publication of application: 08.04.2009
(73) Proprietor: Microsoft Technology Licensing, LLC, Redmond, WA 98052 (US)
(72) Inventor: LEE, Chunkwok, c/o Microsoft Corporation, Redmond, WA 98052 (US); GONG, Kevin, c/o Microsoft Corporation, Redmond, WA 98052 (US)
(74) Representative: CMS Cameron McKenna Nabarro Olswang LLP
(86) International application number: PCT/US2007/015520
(87) International publication number: WO 2008/008267

(56) References cited:
- EP-A2- 0 670 541
- WO-A2-97/21160
- US-A- 5 745 100
- US-A- 5 760 773
- US-A- 5 977 972
- US-A- 6 154 205
- US-A1- 2002 003 529
- US-A1- 2002 041 291
- US-A1- 2004 125 150
- US-A1- 2004 189 714
- US-B1- 6 295 049
- US-B1- 6 433 775
- US-B1- 6 867 790

## Description

### BACKGROUND OF THE INVENTION

### Field of the Invention

This invention relates generally to the field of data processing devices. More particularly, the invention relates to versatile input/output and display configurations for a data processing device.

### Description of the Related Art

Portable data processing devices such as Personal Digital Assistants ("PDAs") and programmable wireless telephones are becoming more powerful every day, providing users with a wide range of applications previously only available on personal computers. At the same time, due to advances in silicon processing technology and battery technology, these devices may be manufactured using smaller and smaller form factors. Accordingly, users no longer need to sacrifice processing power for portability when selecting a personal data processing device.

Although processing devices with small form factors tend to be more portable, users may find it increasingly difficult to interact with them. For example, entering data may be difficult due to the absence of a full-sized keyboard and reading information may be difficult due to a small, potentially dim Liquid Crystal Display ("LCD").

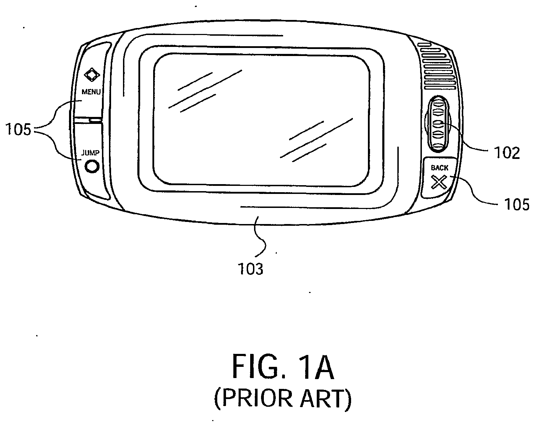

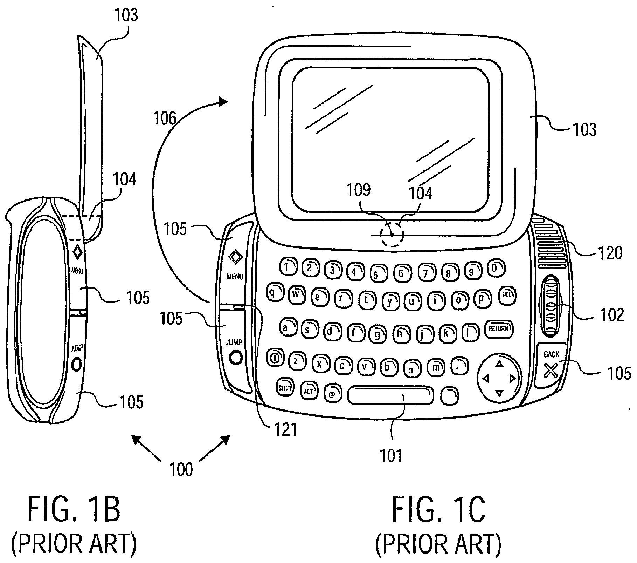

To solve some of these problems, the assignee of the present application developed two data processing devices known commercially as the "Sidekick" and the "Sidekick II," respectively. The Sidekick is illustrated in **Figures 1a****-c.** This data processing device 100 includes a keyboard 101, a control knob/wheel 102 (e.g., for scrolling between menu items and/or data), and a set of control buttons 105 (e.g., for selecting menu items and/or data).

The display 103 is pivotally coupled to the data processing device 100 and pivots around a pivot point 109, located within a pivot area 104, from a first position illustrated in **Figure 1a** to a second position illustrated in **Figures 1b****-c.** When in the first position the display 103 covers the keyboard 101, thereby decreasing the size of the device 100 and protecting the keyboard 101. Even when the display is in the first position, however, the control knob 102 and control buttons 105 are exposed and therefore accessible by the user. The motion of the display 103 from the first position to a second position is indicated by motion arrow 106 illustrated in **Figures 1a****-b.** As illustrated, when in the second position, the keyboard 101 is fully exposed. Accordingly, the display is viewable, and data is accessible by the user in both a the first position and the second position (although access to the keyboard is only provided in the first position).

In one embodiment, the data processing device 100 is also provided with audio telephony (e.g., cellular) capabilities. To support audio telephony functions, the embodiment illustrated in **Figures 1a****-c** includes a speaker 120 for listening and a microphone 121 for speaking during a telephone conversation. Notably, the speaker 120 and microphone 121 are positioned at opposite ends of the data processing device 100 and are accessible when the screen 103 is in a closed position and an open position.

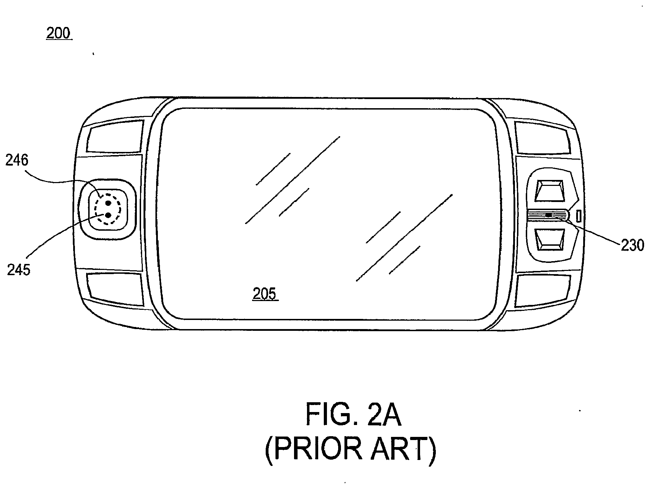

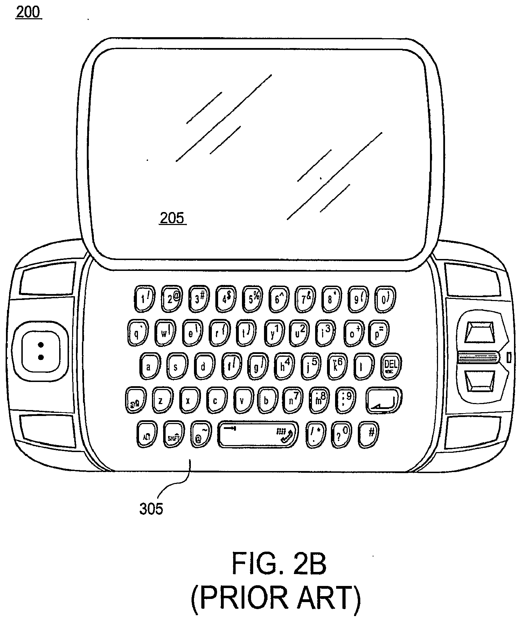

The Sidekick II is illustrated in **Figures 2a****-b.** This data processing device 200 includes many of the same features as the Sidekick such as, for example, a pivoting display 205 which reveals an alphanumeric keyboard 305 and a control wheel 230. In addition, the Sidekick II includes a directional pad 245 for performing cursor control operations and an integrated speaker 246 and LED (not shown).
US 6867790 B1 discloses that methods and apparatus are provided for controlling pointer movement on a user interface display screen in a computer system. Selected areas of a display screen are defined to provide predetermined pointer movement control actions. Visual cues to the selected areas are provided for the user. The pointer movement control actions assist computer users in selecting desired operations or objects while minimizing potential for inadvertent user selections or mistakes by a barrier. At barrier, the pointer changes speed, such as slows down, or stops so that screen space beyond barrier cannot be entered from the direction of approach through the barrier.
US 6154205 discloses a television-based hyperlink content navigation system includes a display device having a viewing area for displaying visual content such as an Internet Web document.
US 2002/041291 discloses methods, system, and computer program products for browsing content with a display area and input system that may be limited in comparison to more traditional browsing systems.

As mentioned above, the control wheels 102 and 230 in these and other devices may be used to scroll through lists of items such as menu items and/or data entry fields. However, one limitation of the scroll wheel is that it is only capable of navigating within a single dimension. For example, by manipulating the control wheel 112, a user may move a graphical selection element either "up" or "down" in relation to the orientation of the screen (or "left" or "right" depending on how the user interface is programmed). However, the control wheel does not allow the user to navigate in any desired direction on the screen. Accordingly, a more flexible user interface solution for navigating within a graphical interface of a mobile device is needed.

### SUMMARY

There is provided a device according to independent claim 1 and a method according to independent claim 4. A graphical user interface is described below which comprises a first predefined display window, a second predefined display window, and a logical barrier between the first predefined display window and the second predefined display window, the logical barrier configured to temporarily prevent movement of a highlighting from a selectable graphical element in the first predefined display window to a selectable graphical element in the second predefined display window responsive to an input on a trackball for selecting the selectable graphical element in the second predefined display window while the selected graphical element in the first predefined display window is highlighted, the logical barrier further configured to temporarily prevent the movement of the highlighting for a specified amount of rotation of the trackball directed towards the selectable graphical element in the second predefined display window, wherein the second predefined display window is not visible when the first predefined display window is visible on a display of the device, and the first predefined display window is not visible when the second predefined display window is visible on the display of the device.

### BRIEF DESCRIPTION OF THE DRAWINGS

A better understanding of the present invention can be obtained from the following detailed description in conjunction with the following drawings, in which:
**FIGS. 1a****-c** illustrate a prior art data processing device with a control wheel and an adjustable display.
**FIGS. 2a****-b** illustrate another prior art data processing device with a control wheel and a display.
**FIGS. 3a****-b** illustrate one embodiment of a data processing device with a trackball.
**FIGS. 4a****-b** illustrate one embodiment of a method for navigating within a graphical user interface using a trackball.
**FIG. 4c** illustrates an exemplary GUI on which embodiments of the invention may be implemented.
**FIGS 5a****-f** illustrate exemplary graphical user interfaces within which the method of FIGS. 4a-b may be employed.
**FIGS 6a****-c** illustrate one embodiment of the invention for navigating and editing text fields.
**FIG. 7** illustrates one embodiment of the invention for selecting text within a graphical user interface.
**FIG. 8** illustrates additional techniques for selecting text according to one embodiment of the invention.
**FIGS. 9a****-b** illustrate additional navigation techniques employed within a graphical user interface according to one embodiment of the invention.
**FIGS. 10a****-e** illustrate the implementation of logical boundaries according to one embodiment of the invention.

### DETAILED DESCRIPTION OF PREFERRED EMBODIMENTS

The present invention is defined by the independent claims. Further aspects of the invention are outlined in the dependent claims. Embodiments which do not fall within the scope of the claims do not describe part of the present invention. In the following description, for the purposes of explanation, numerous specific details are set forth in order to provide a thorough understanding of the present invention. It will be apparent, however, to one skilled in the art that the present invention may be practiced without some of these specific details. In other instances, well-known structures and devices are shown in block diagram form to avoid obscuring the underlying principles of the present invention.

Several different techniques for implementing a trackball on a mobile data processing device are described below. As will be apparent from the following description, many of these configurations are particularly beneficial when employed on a dual-purpose data processing device such as a personal digital assistant ("PDA") or other mobile computing device having integrated wireless telephony capabilities (e.g., a combination PDA and cell phone). However, it should be noted that the underlying principles of the invention are not limited to a wireless telephony configuration.

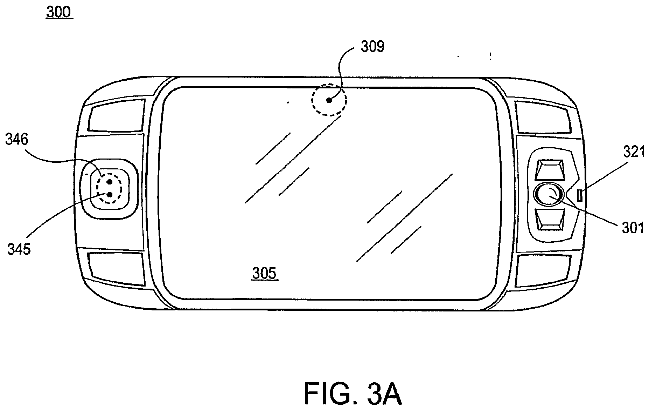

A data processing device 300 according to one embodiment of the invention is illustrated in **Figures 3a****-b.** Unlike the prior data processing devices described above, this data processing device 300 includes a trackball 301 for navigating through graphical images and text displayed on the data processing device display 305. In addition, in one embodiment, the trackball 301 may be clicked down into the data processing device to generate a selection function (i.e., similar to the functions provided by a standard mouse button).

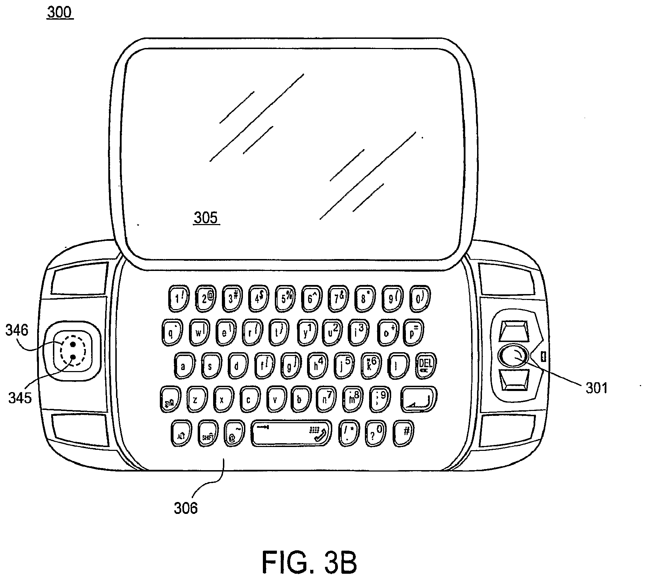

In one embodiment, the data processing device 300 display adjusts as in the prior data processing devices described above. For example, in one embodiment, the display 305 is pivotally coupled to the data processing device 300 and pivots around a pivot point 309 from a first position illustrated in **Figure 3a** to a second position illustrated in **Figure 3b****.**

When in the first position the display 305 covers the keyboard 306, thereby decreasing the size of the device 300 and protecting the keyboard 306. Even when the display is in the first position, however, the trackball 301 and control buttons, such as directional pad 345, are exposed and therefore accessible by the user. As illustrated in **Figure 3b****,** when in the second position, the keyboard 306 is fully exposed. Accordingly, the display is viewable, and data is accessible by the user in both the first position and the second position (although access to the keyboard is only provided in the first position).

In one embodiment, the data processing device 300 is also provided with audio telephony (e.g., cellular) capabilities. To support audio telephony functions, the embodiment illustrated in **Figures 3a****-b** includes a speaker 346 (embedded within the directional pad) for listening and a microphone 321 for speaking during a telephone conversation. Notably, the speaker 346 and microphone 321 are positioned at opposite ends of the data processing device 300 and are accessible when the screen 305 is in a closed position and an open position.

Implementing a trackball 301 on a portable data processing devices presents several unique challenges. For example, the relatively small display screen may provide inadequate space for a true "point-and-click" environment (e.g., such as a Windows environment in which is user is provided the ability to move a pointer and click on any graphic on the screen). That is, the graphics displayed on the data processing device display may be so small and close together that moving a cursor to the correct position to identify an icon may be difficult. In addition, with mobile devices, users often do not have the same focus as with a standard personal computer (e.g., users are not sitting at a desk when using a mobile device). Accordingly, simplified navigation techniques for use with a trackball are needed.

In one embodiment of the invention, to simplify navigation, in response to user manipulation of the trackball, a "selection element" or "selection graphic" traverses through a limited number of selectable user interface elements displayed within the user interface (e.g., data fields, menu items, text, etc). This approach eliminates unnecessary trackball movement by the user, prevents user errors, and makes the graphical navigation as efficient as possible.

### General Trackball Navigation

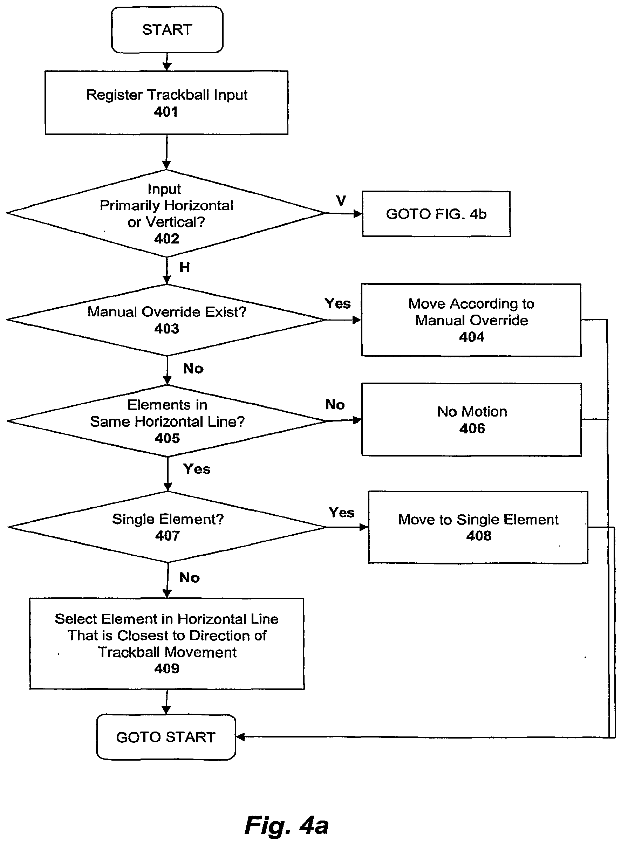

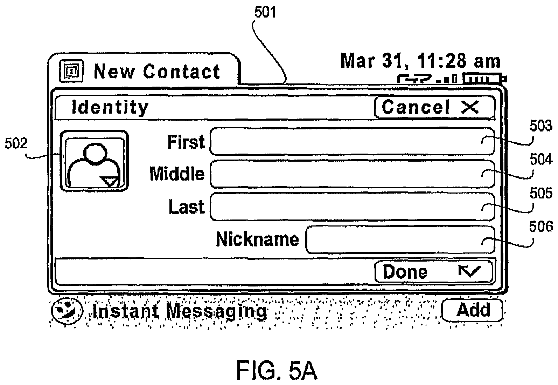

One embodiment of a method for selecting elements using a trackball input device is illustrated in **Figures 4a****-b.** The term "element" is used broadly in this context to refer to any type of image on a display screen including, for example, data input fields, menu items, text and graphical icons. Following the description of **Figures 4a****-b,** a series of specific examples within a graphical user interface will be provided in **Figures 5a****-f.**

Turning to **Figure 4a****,** at 401, the data processing device registers a trackball input from a user. At 402 a determination is made as to whether the user input is primarily a horizontal input (e.g., left or right) or primarily a vertical input (e.g., up or down). Given that the user may scroll the trackball in virtually any direction, the input may inadvertently include both horizontal and vertical components. One embodiment of the data processing device 300 determines whether the input is a "horizontal" input or a "vertical" input based on the relative horizontal and vertical components of the input (i.e., the input is a vector with both horizontal and vertical components). If the input has a relatively larger horizontal component, then subsequent trackball movements will be biased to continue horizontally; conversely, if the input has a relatively larger vertical component, then subsequent trackball movements will be biased vertically.

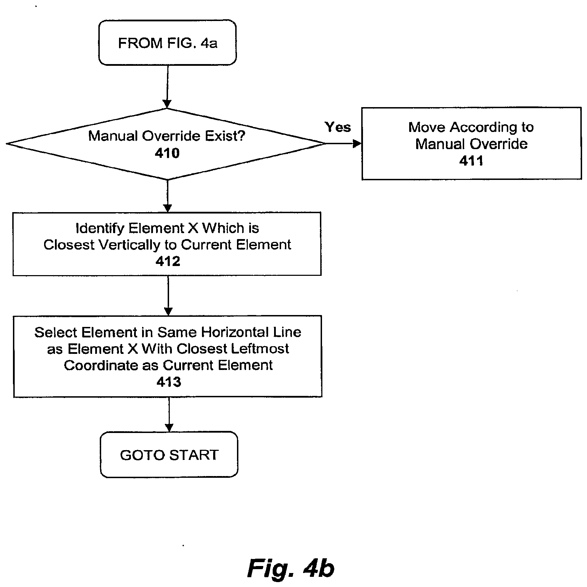

If the input is identified as vertical, then the process flows to **Figure 4b** (described below). If the input is identified as horizontal, then the process flows to 403 where a determination is made is to whether a manual override exists for the requested motion 403. For example, in some cases, the core techniques described below for selecting an element within a user interface may not be desirable. In these cases, the user interface programmer may manually identify the desired operation for the user interface. For example, if the techniques described below would cause an element to be selected which is unlikely to be the element that a user would wants to select, then the manual override will cause a different (more likely desired) element to be selected.

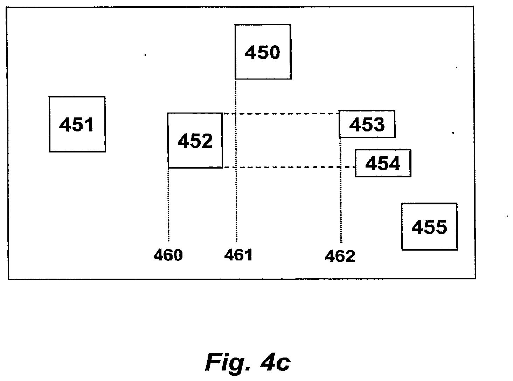

If no manual override exists, then at 405 a determination is made as to whether elements exist within the same horizontal line as that occupied by the current element - that is, whether another element exists which includes at least some overlapping vertical coordinates with the current element. For example, in **Figure 4c****,** elements 453 and 454 are in the same horizontal "line" as element 452 because at least some of their vertical coordinates overlap.

If no elements are in the same horizontal line as the current element, then no new element is selected at 406. For example, if the user scrolls the trackball 301 to the left/right and if no elements exist to the left/right (within the range of vertical coordinates occupied by the current element), then no new element will be selected.

If, however, elements exist within the range of vertical coordinates defined by the current element, then at 407 a determination is made as to whether more than one element exists with overlapping vertical coordinates. If so, then at 406, the one element is selected. If not, then at 409 the element in the same horizontal line which is closest to the direction of the trackball motion will be selected. For example, in **Figure 4c****,** if element 452 is currently selected and the user scrolls right and slightly upward, then element 453 will be selected. Conversely, if element 452 is currently selected and the user scrolls right and slightly downward, then element 454 will be selected. Alternatively, in one embodiment, the element with a relatively larger vertical coordinate is automatically selected (i.e., the element relatively closer to the top edge of the display - element 453 in the example).

**Figure 4b** illustrates a process for selecting an element in response to a vertical motion (i.e., moving the trackball up or down in relation to the display). At 410, a determination is made as to whether a manual override exists. If so, then the new element is selected in accordance with the manual override at 411. If not, then at 412, the element X which is closest vertically to the current element is identified. For example, in **Figure 4c****,** the element closest vertically to element 450 is element 451. At 413, the element in the same horizontal line as element X (or element X if there are no other elements in the same horizontal line) with the closest left-most coordinate to the current element is selected. For example, in **Figure 4c****,** element 452 is selected in response to a downward movement from element 450 because the leftmost coordinate 460 of element 452 is closest to the leftmost coordinate 461 of element 450 (e.g., it is closer on the horizontal axis than the leftmost element 462 of element 453).

Various alternate and/or additional techniques may be used to select the next element in response to a trackball signal. For example, in one embodiment, in response to a vertical or horizontal movement signal, the element having the largest horizontal range or vertical range, respectively overlapping with the current element may be selected. Various other techniques for selecting the next element may be employed while still complying with the underlying principles of the invention.

**Figures 5a****-f** illustrate specific examples of the foregoing processes (assuming that no manual overrides exist). **Figure 5a** illustrates a data entry box 501 with an icon picker element 502 for selecting an icon and data entry fields 503-506 for entering the name and nickname of a user. If the icon picker element 502 is initially selected (as shown) and the user scrolls horizontally to the right, then a determination is made that two data entry fields 503-504 have overlapping vertical coordinates with the icon picker element 502 (i.e., they are both generally to the right of the icon picker element 502). As such, the data entry field which has relatively higher vertical coordinates is selected - in this example, the "first name" field 503. If the user now the scrolls vertically downward, data fields 504-506 will be selected in succession. If the user scrolls to the left from either data entry field 505 or 506, no new element will be highlighted because no element to the left of these fields has vertical coordinates which overlap with these fields. By contrast, if the user scrolls to the left from either data entry field 503 or 504, the icon picker element will be selected because it shares overlapping vertical coordinates with these fields.

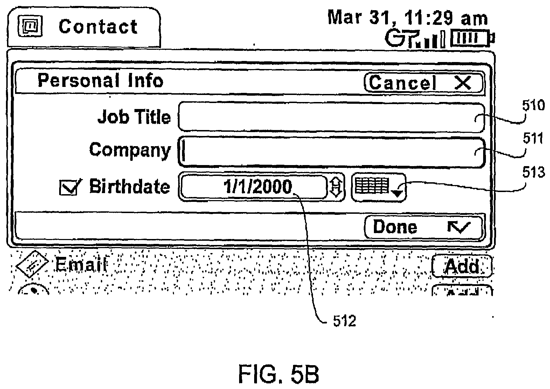

**Figure 5b** illustrates another data entry box including data entry fields for Job Title 510, Company 511 and Birthdate 512 as well as a Month Picker element 513. If the currently selected element is the Company field 511 and the user scrolls down using the trackball, then the Birthdate field 512 will be selected because the leftmost coordinate of the Company element 511 is closest to the leftmost coordinate of the Birthdate element.

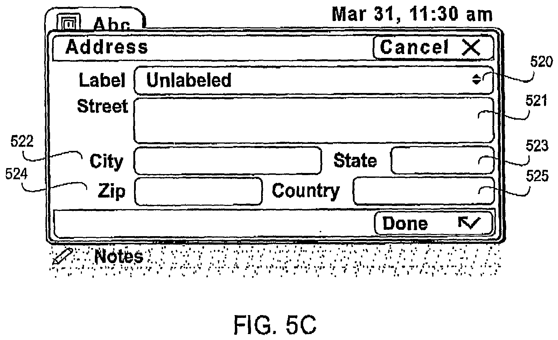

**Figure 5c** illustrates an Address data entry box including data entry fields for Label 520, Street 521, City 522, State 523, Zip 524, and Country 525. If the currently selected element is the State field 523 and the user scrolls down using the trackball, then the Country field 525 will be selected because the leftmost coordinate of the Country field 525 is closest to the leftmost coordinate of the State field 523. Similarly, if the currently selected element is the Country field 525 and the user scrolls up using the trackball, then the State field 523 will be selected because the leftmost coordinate of the State field 523 is closest to the leftmost coordinate of the State field 525.

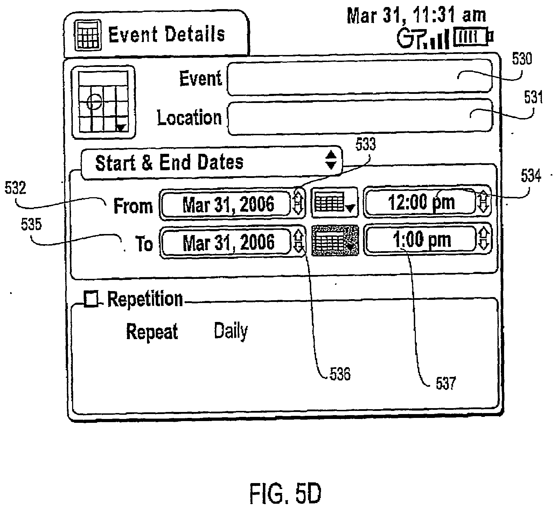

**Figure 5d** illustrates a data entry box for specifying calendar event information including data entry fields for an event name 530, a location 531, a start date field 532, a month picker box for the start date 533 a time picker box for the start date 534, an end date field 535, a month picker box for the end date 536, and a time picker box for the end date 537. In this example, if the month picker box for the end date 536 is currently selected and the user scrolls up, the month picker box for the start date 533 will be selected because the leftmost coordinate of month picker box 536 is closest to the leftmost coordinate of month picker box 533. Thus, month picker box 533 is selected even though the start date field 532 and time picker box 534 are closer vertically by one pixel. One embodiment of the invention initially groups start date field 532, the month picker box 533 and the time picker box 534 together because they are in the same horizontal line and then picks the one with the closest left coordinate.

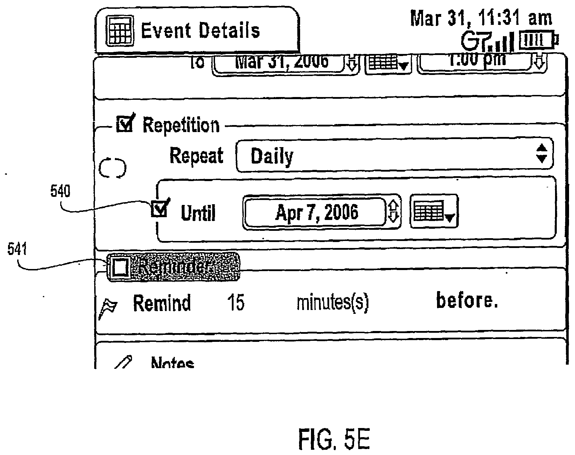

**Figure 5e** illustrates another example that includes (among other elements) an Until check box 540 and a Reminder check box 541. In this example, if the currently selected element is the Reminder check box 541 and the user scrolls up using the trackball, then the Until check box 540 will be selected because the leftmost coordinate of the Until check box 540 is closest to the leftmost coordinate of the Reminder check box 541.

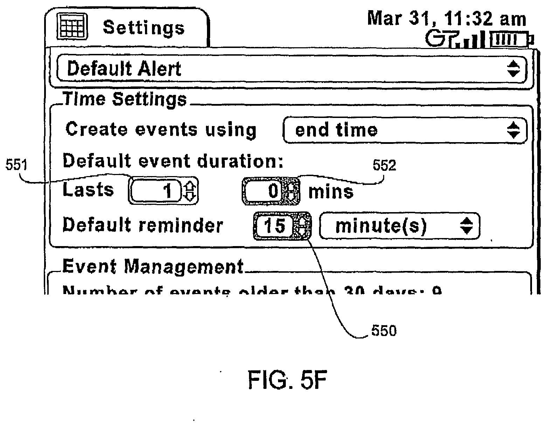

Similarly, **Figure 5f** illustrates an example that includes a default reminder data entry field 550, an hour data entry field 551, and a minute data entry field 552. In this case, if the currently selected element is the default reminder data entry field 550 and the user scrolls up using the trackball, then the minute data entry field 552 will be selected because the leftmost coordinate of the minute data entry field 552 is closest to the leftmost coordinate of the default reminder data entry field 550.

### Quick Edit Text Fields

One embodiment of the invention employs techniques for navigating and editing text entry fields using the trackball 301. Specifically, in this embodiment, scrolling the trackball 300 causes each of the text entry fields to be selected according to the techniques described above (e.g., based on leftmost data field coordinate when moving vertically and based on overlapping vertical coordinates when moving horizontally). When a particular text entry field is initially selected, the field is "focused" and a highlight is provided to indicate that the whole text field is selected. At this stage, typing on the keyboard 306 cases the current text within the field to be replaced by the newly entered text. By contrast, clicking the trackball 301 into the data processing device 300 or the directional pad 345 causes a cursor to enter the text entry field, thereby allowing the user to edit the text. Scrolling the trackball 301 with the cursor in the text and/or at the end of the text causes a new field to be selected and focused. By contrast, clicking on the directional pad 345 at this stage causes the cursor to move through the text of the selected field.

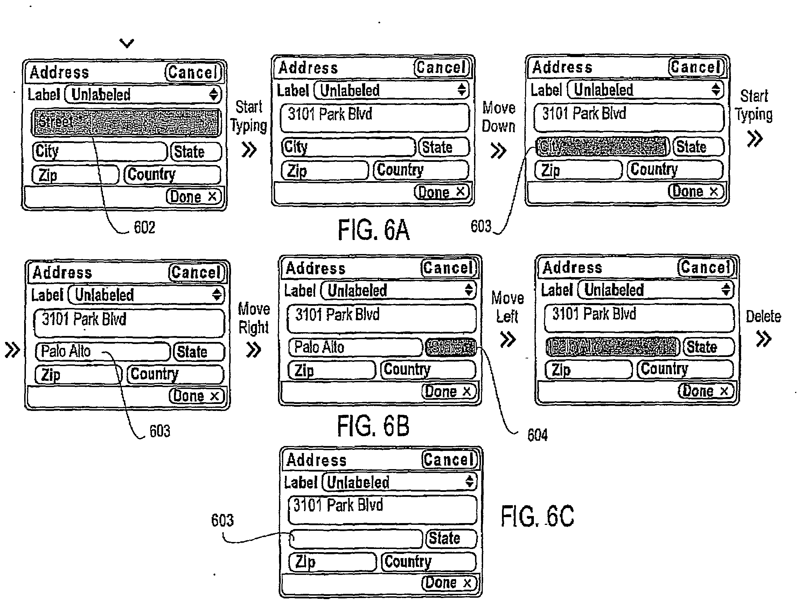

**Figures 6a****-c** provide an example of the foregoing operation. In **Figure 6a** a text entry field for entering a street 602 is initially selected. The entire text entry field is highlighted to provide an indication that text entry will replace the current contents of the field 602. In addition, unlike prior user interfaces, the label for the text entry field (e.g., "State") is provided as text within the field itself. In response to the user scrolling left on the trackball, the city field is once again highlighted. In the illustrated example, the user types a street number and then scrolls down on the trackball to cause a text entry field for entering a city 603 to become highlighted. As the user begins typing the city, the city label is replaced, as indicated in **Figure 6b****.** In response to a rightward scroll after the city is entered, a text entry field for entering a state 604 is highlighted. If the user does not enter text but instead scrolls left, all of the text for the previously-entered city is highlighted, as indicated in **Figure 6b****.** If the user then selects the delete button or types any text, the contents of the city text entry field are deleted or replaced, respectively, as indicated in **Figure 6c****.**

In one embodiment, a new text entry field is selected in response to a trackball motion only if the cursor is at the beginning or end of the text within the current text entry field and the cursor is scrolled to the left or right, respectively, or if the trackball is scrolled up or down regardless of the location of the cursor. For example, if the cursor is positioned to the right of the text in text entry box 603 as shown in the first frame of **Figure 6b** and the user scrolls right, a new text entry field 604 is selected. However, in one embodiment, if the user scrolls left in this situation, the cursor will responsively move one character at a time through the text within the text entry box 602 until it reaches the beginning of the text.

Alternatively, in one embodiment, scrolling the trackball will cause another field to be highlighted regardless of the position of the cursor. In this embodiment, the cursor is moved via the directional pad rather than the trackball.

### Text Selection

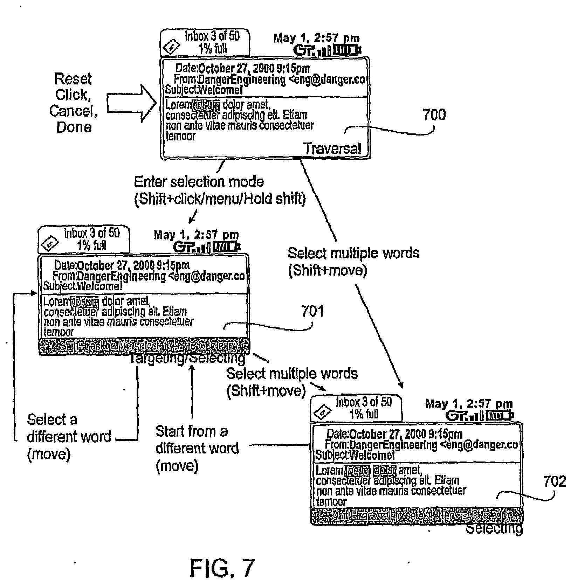

One embodiment of the invention provides techniques to select text using the trackball 301 when in a "reading" mode such as, for example, when viewing a Web page or email message. These techniques will be described with respect to **Figure 7****.**

In this embodiment, the user is reading a page of an email message containing text, hyperlinks and graphics. Three modes of operation are provided for navigating the page - a "standard" mode, a "targeting/selecting" mode (hereinafter "targeting" mode), and a "selection" mode. When in the standard mode shown in window 700, only hyperlinks are selected in response to movement of the trackball 301. That is, in response to the user scrolling the trackball, the highlighter will jump from one hyperlink to the next, bypassing all non-hyperlinked text. This mode may be used to standard Web browsing operations.

In one embodiment, the user may cause the device to enter the "targeting" mode by selecting a command from a menu, or pressing and/or holding down a specified shortcut key (e.g., the shift key from the keyboard 306). When in targeting mode, both hyperlinked text, non-hyperlinked text and graphical elements are selected in response to the trackball movement. Specifically, as the user moves the trackball, the highlighter highlights each word in succession in the direction of the trackball motion (rather than just hyperlinked words). As illustrated in window 701, the highlighter may change color and the formatting used for the hyperlinked words may change to indicate that the device is in the targeting mode. The user may position the start of the desired text selection point in either standard mode (if the start is a hyperlink) or targeting mode.

Once the start of the desired text selection point is identified, the user can enter into the selection mode by moving the trackball while holding down a specified shortcut key (e.g. Shift) to select a piece of contagious text. In one embodiment, while holding down the designated shortcut key, each additional word in succession will be highlighted along with the currently selected word(s). This is illustrated graphically in window 702. The user may then copy the text (e.g., using a copy command from the menu or designated key combination), or return to the positioning state by releasing the shortcut key and moving the trackball so that another piece of text can be selected.

Selecting on a word-by-word basis as described above is efficient and less error-prone than selecting on a character-by-character basis. However, the underling principles of the invention may still be implemented using character-by-character selection.

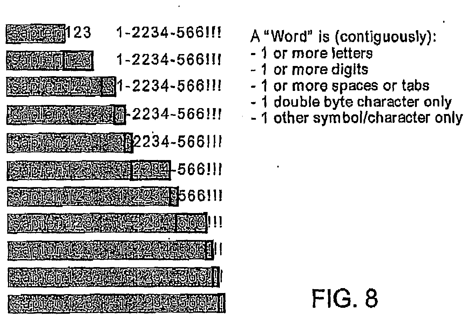

Assuming a word-by-word selection is employed, in one embodiment a "word" is defined to be any of the following: (a) one or more letters, (b) one or more digits, blocks of spaces, (c) one punctuation/symbol/special characters. In this way, the majority of text selection circumstances are easily captured. The foregoing features are illustrated in **Figure 8** which shows an exemplary sequence of numbers, letters and other characters: sapien123 1-2234-566!!!. In response to the targeting motion described above, the "sapien" sequence of characters is logically separated from the set of numbers which follow ("123"). This is true even though no space exists between the letters and numbers. As the user holds down the designated control key (e.g., Shift) and scrolls the wheel to the right, the following characters are selected in succession: 123, space, 1, -, 2234, -, 566, !, !, !. Thus, the system selects numbers separated by dashes in groups (e.g., 2234), and highlights special characters such as the dashes, spaces and exclamation points individually. The purpose of the foregoing algorithm is to provide a selection mechanism which is both efficient and which reflects selections which are most likely intended by the user (e.g., it is unlikely that the user would want to highlight only a portion of 2234 in the example above).

### Browser Navigation

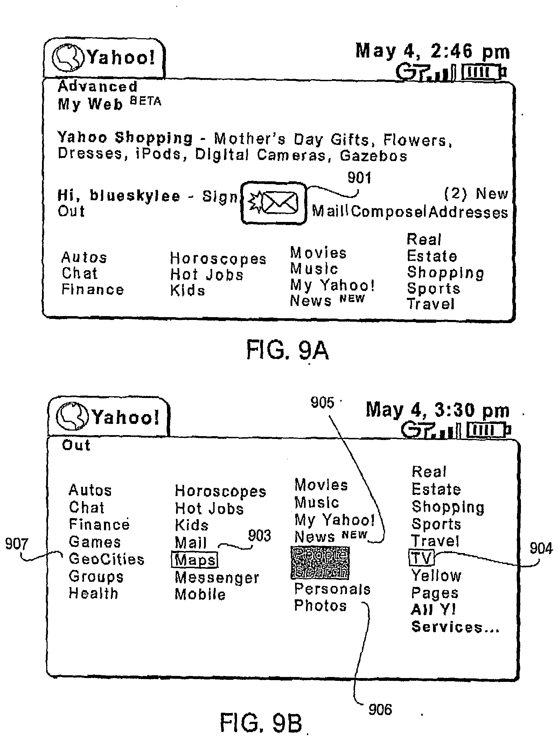

In one embodiment, special link navigation features are provided to improve Web browser navigation. For example, on certain Web pages on mobile devices, hyperlinks may be positioned arbitrarily and may have various sizes and lengths. Consequently, users may have a problem knowing which link will be highlighted after they roll the trackball up, down, left or right. For example, in **Figure 9a****,** the mail icon 901 is the currently highlighted link but it is unclear which link will become highlighted when the user scrolls down (e.g., Movies or Horoscopes).

To solve these problems, one embodiment of the invention visually identifies the links which will be selected in response to a trackball motion moving away from the current link. In **Figure 9b****,** the current link is "People Search" 902. To provide an indication of the links which will be selected if the user scrolls the trackball, the potential links are highlighted in a transparent color. In addition, to differentiate the different directions of movement the links to the left/right are provided with different colors than the links above/below the current link 902. In the illustrated example, the Map link 903 and the TV link 904 are colored purple and the News link 905 and the Personals link 906 are colored gray. In addition, in one embodiment, the further away the link is from the current element, the higher the transparency value associated with the link (e.g., the Geocities link 907 has a higher transparency value, and is therefore more transparent, than the Maps link 903). As the user move to a new link, the highlights are regenerated accordingly.

### Logical Barriers

One embodiment of the invention employs logical barriers between windows and other graphical elements to prevent the user from inadvertently navigating in the wrong direction. For example, if the user intends to scroll down a menu structure with the trackball 301 and inadvertently scrolls to the right or left, these embodiments of the invention do not immediately register the right and/or left input.

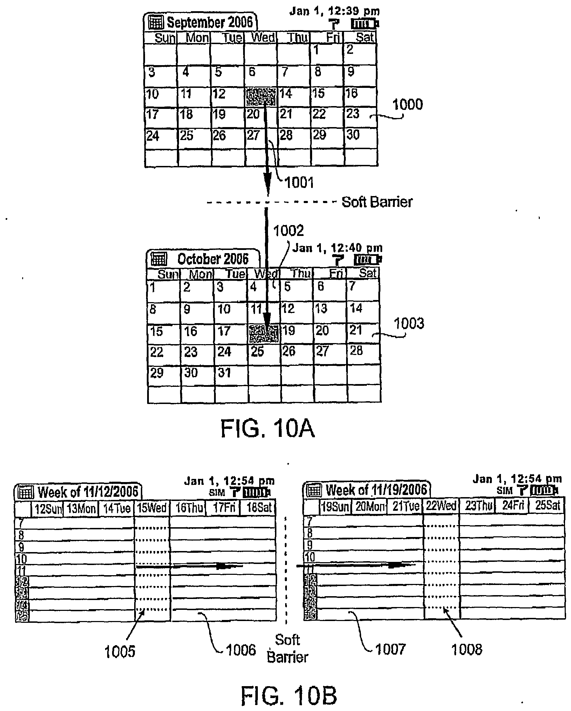

**Figures 10a****-b** illustrate one embodiment of a logical barrier between two months of a calendar program. In **Figure 10a****,** the month of September is shown in window 1000 and the month of October is shown in window 1003. In this particular example, the user scrolls down on the trackball from September 13 to September 27 (block 1001). Once September 27 has been highlighted, the logical barrier will initially prevent the highlight from moving to the October window 1003 in response to additional downward scrolling motion. In one embodiment, the logical barrier comprises a short duration of time (e.g., 4/10 second, 1/2 second, etc) during which the user may continue to scroll downward without any effect. Alternatively, or in addition, the logical barrier comprises a specified amount of rotation in the downward direction (e.g., a specified number of downward "clicks" on the trackball). After the short duration of time and/or amount of downward motion, an additional downward scroll on the trackball 301 will move the highlight to the October 4 date 1002 within the October window 1003. In one embodiment, the logical barriers are user-configurable, allowing the user to specify whether a specified amount of time and/or a measurable downward scroll is to be used as the logical barrier.

**Figure 10b** illustrates the same general principles with a weekly calendar view. In this example, a Wednesday, Nov 15^{th} entry 1005 is initially selected within the week of 11/12/06 (window 1006). In response to scrolling the trackball to the right, each of the days from 11/15 to 11/18 are highlighted in succession. When the final day within the window 1006 is highlighted (11/18), a logical barrier will initially prevent the next window 1008 to be displayed in response to additional rightward trackball motion. After a specified amount of time (e.g., 4/10 second, 1/2 second, etc) and/or a specified amount of additional rightward motion on the trackball, the cursor will move to the first date entry 1007 in the new window 1008.

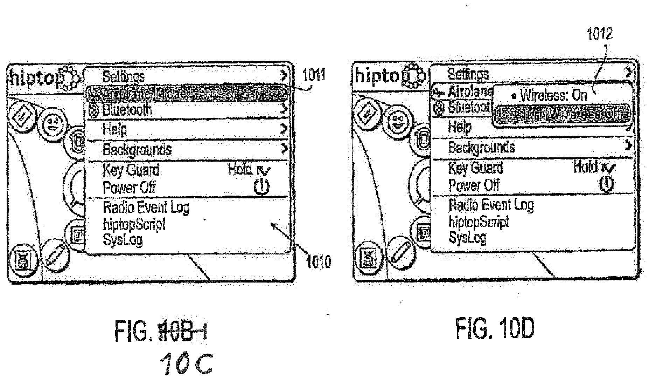

**Figures 10c****-e** illustrate a particular type of logical barrier referred to as a "rail guard" for preventing inadvertent trackball movements within a hierarchical menu structure according to one embodiment of the invention. Specifically, **Figure 10c** shows a drop down menu 1010 with a plurality of selectable elements which may be selected via an up/down scrolling motion on the trackball 301. Certain elements, such as element 1011, have sub-elements associated with them (as indicated by the right-pointing arrow displayed on some of the elements). The user scrolls right on the trackball 301 when the element 1011 is highlighted to expose the sub-elements. For example, scrolling right when element 1011 bring up a set of "Airplane Mode" sub-elements, as illustrated in **Figure 10d****.**

In one embodiment, of the invention, the "rail guard" logical barrier is configured on each element to prevent the sub-elements from being exposed in response to an inadvertent right/left scrolling motion. More specifically, the sub-elements will be selected in response to a rightward motion only after a specified amount of time after the vertical motion has stopped (e.g., 2/10 of a second). Thus, any horizontal motion which occurs within the specified amount of time after vertical motion stops is deemed accidental and is ignored. Alternatively, or in addition, the sub-elements may be selected only after a specified amount of additional rightward motion on the trackball.

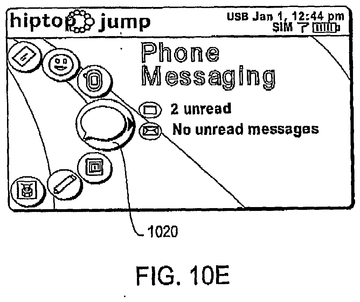

In one embodiment of the invention, the same concepts are applied to the graphical, circular menu structure such as the one illustrated in **Figure 10e****.** That is, certain menu elements such as element 1020 have sub-elements associated with them which will be selected in response to a rightward motion only after a specified amount of time and/or a specified about of additional rightward motion on the trackball.

The end result of the logical barriers described above is that inadvertent motion by a user at the edge of a window or other graphical element will not cause unwanted movements into an adjacent window and/or other graphical element, respectively, thereby improving the navigation experience for the user.

Embodiments of the invention may include various steps as set forth above. The steps may be embodied in machine-executable instructions. The instructions can be used to cause a general-purpose or special-purpose processor to perform certain steps. Alternatively, these steps may be performed by specific hardware components that contain hardwired logic for performing the steps, or by any combination of programmed computer components and custom hardware components.

Elements of the present invention may also be provided as a machine-readable medium for storing the machine-executable instructions. The machine-readable medium may include, but is not limited to, floppy diskettes, optical disks, CD-ROMs, and magneto-optical disks, ROMs, RAMs, EPROMs, EEPROMs, magnetic or optical cards, propagation media or other type of media/machine-readable medium suitable for storing electronic instructions. For example, the present invention may be downloaded as a computer program which may be transferred from a remote computer (e.g., a server) to a requesting computer (e.g., a client) by way of data signals embodied in a carrier wave or other propagation medium via a communication link (e.g., a modem or network connection).

Throughout the foregoing description, for the purposes of explanation, numerous specific details were set forth in order to provide a thorough understanding of the invention. It will be apparent, however, to one skilled in the art that the invention may be practiced without some of these specific details. Accordingly, the scope of the invention is defined by the claims which follow.

## Claims

1. A data processing device (300) having a memory for storing program code and a processor for processing the program code to generate a graphical user interface (GUI), for navigating within the GUI, the GUI comprising:
a first predefined display window;
a second predefined display window; and
a logical barrier between the first predefined display window and the second predefined display window, the logical barrier configured to temporarily prevent movement of a highlighting from a selectable graphical element in the first predefined display window to a selectable graphical element in the second predefined display window responsive to an input on a trackball for selecting the selectable graphical element in the second predefined display window while the selected graphical element in the first predefined display window is highlighted, the logical barrier is further configured to temporarily prevent the movement of the highlighting for a specified amount of rotation of the trackball (301) directed towards the selectable graphical element in the second predefined display window, wherein the second predefined display window is not visible when the first predefined display window is visible on a display (305) of the device, and the first predefined display window is not visible when the second predefined display window is visible on the display (305) of the device (300).

2. The data processing device (300) of claim 1, wherein the first predefined display window and the second predefined display window are configured to each individually occupy the entire display (305) of the device (300) .

3. The data processing device (300) of claim 1, wherein:
the first predefined display window comprises a first month within a graphical calendar interface, and the selectable graphical element in the first predefined display window comprises a calendar entry in the first month within the graphical calendar interface; and
the second predefined display window comprises a second month within the graphical calendar interface, and the selectable graphical element in the second predefined display window comprises a calendar entry in the second month within the graphical calendar interface.

4. A computer-implemented method for navigating with a trackball (301) through a plurality of graphical elements within a graphical user interface of a mobile device, wherein the graphical user interface comprises a logical barrier, the method comprising: locating the logical barrier between a first predefined display window and a second predefined display window, the logical barrier configured to temporarily prevent movement of a highlighting from a selectable graphical element in the first predefined display window to a selectable graphical element in the second predefined display window responsive to a trackball input for selecting the selectable graphical element in the second predefined display window while the selected graphical element in the first predefined display window is highlighted, the logical barrier temporarily preventing the movement of the highlighting for a specified amount of rotation of the trackball (301) directed towards the selectable graphical element in the second predefined display window, wherein the second predefined display window is not visible when the first predefined display window is visible on the display (305) of the device, and the first predefined display window is not visible when the second predefined display window is visible on the display (305) of the device (300).

5. The method of claim 4, further comprising:
detecting (401) a trackball motion having a vertical component and a horizontal component when a first element is selected;
determining (402-V) that the trackball motion comprises a substantially vertical motion when the vertical component is greater than the horizontal component; and
responsively selecting either a second element which is closest vertically to the first element (412) or a third element in the same horizontal line as the second element (413) if the distance between a leftmost horizontal coordinate of the third element and a leftmost horizontal coordinate of the first element is less than the distance between a leftmost horizontal coordinate of the second element and the leftmost horizontal coordinate of the first element.

6. The method of claim 5, further comprising:
determining (410) if a manual override exists (410-Yes) defining a motion (411) from the first element to a fourth element in response to the substantially vertical motion; and
selecting the fourth element in response to the manual override.

7. The method of claim 5, further comprising:
detecting a substantially horizontal motion (402-H) on the trackball (301) when the first element is selected; and
selecting (409) an element in the same horizontal line as the first element which is closest to the direction of the trackball motion.

8. The method of claim 5, wherein detecting a substantially horizontal motion (402-H) comprises:
detecting a trackball motion having a vertical component and a horizontal component and determining that the motion comprises a substantially horizontal motion if the horizontal component is greater than the vertical component.

9. The method as in claim 5, wherein the elements comprise text entry fields and/or drop-down menu elements or drop-down menu elements.

10. The data processing device (300) for navigating within the graphical user interface as in any of claims 1 to 3, wherein the data processing device is a wireless, mobile device, and wherein:
the display (305) for displaying the graphical user interface is configured to include a plurality of selectable graphical elements;
the trackball (301) is configured for receiving user input to cause movement between the selectable graphical elements; and
the processor for processing the program code is configured to perform the operations of:
detecting (401) a trackball motion having a vertical component and a horizontal component when a first element of a group of graphical elements is selected; and
determining (402-V) that the trackball motion comprises a substantially vertical motion when the vertical component is greater than the horizontal component; and
responsively selecting either a second element which is closest vertically to the first element (412) or a third element in the same horizontal line as the second element (413) if the distance between a leftmost horizontal coordinate of the third element and a leftmost horizontal coordinate of the first element is less than the distance between a leftmost horizontal coordinate of the second element and the leftmost horizontal coordinate of the first element.

11. The data processing device (300) as in claim 10, comprising additional program code to cause the processor to perform the operations of:
determining (410) if a manual override exists (410-Yes) defining a motion (411) from the first element to a fourth element in response to the substantially vertical motion and
selecting the fourth element in response to the manual override.

12. The data processing device (300) as in claim 10, comprising additional program code to cause the processor to perform the operations of:
detecting an additional trackball motion having a vertical component and a horizontal component when the first element is selected;
determining that the additional trackball motion comprises a substantially horizontal motion (402-H) when the horizontal component is greater than the vertical component; and
selecting (409) an element in the same horizontal line as the first element which is closest to the direction of the additional trackball motion.

13. The data processing device (300) as in claim 10, wherein the graphical elements comprise text entry fields.

14. The data processing device (300) as in claim 10, wherein the graphical elements comprise drop-down menu elements.

15. A computer-readable medium having program code stored thereon which, when executed by a computer, causes the computer to perform the method of anyone of claims 4 to 9.

## Patentansprüche

1. Datenverarbeitungsvorrichtung (300) mit einem Speicher zum Speichern von Programmcode und einem Prozessor zum Verarbeiten des Programmcodes, um ein grafische Benutzeroberfläche (GUI) zur Navigation innerhalb der GUI zu erzeugen, wobei die GUI umfasst:
ein erstes vordefiniertes Anzeigefenster;
ein zweites vordefiniertes Anzeigefenster; und
eine logische Barriere zwischen dem ersten vordefinierten Anzeigefenster und dem zweiten vordefinierten Anzeigefenster, wobei die logische Barriere konfiguriert ist, Bewegung einer Markierung von einem auswählbaren grafischen Element in dem ersten vordefinierten Anzeigefenster zu einem auswählbaren grafischen Element in dem zweiten Anzeigefenster als Reaktion auf eine Eingabe auf einer Rollkugel zum Auswählen des auswählbaren grafischen Elements in dem zweiten vordefinierten Anzeigefenster vorübergehend zu verhindern, während das ausgewählte grafische Element in dem ersten vordefinierten Anzeigefenster markiert ist, wobei die logische Barriere weiter konfiguriert ist, die Bewegung der Markierung für eine ausgewählte Menge an Rotation der Rollkugel (301), gerichtet zu dem auswählbaren grafischen Element in dem zweiten vordefinierten Anzeigefenster vorübergehend zu verhindern, wobei das zweite vordefinierte Anzeigefenster nicht sichtbar ist, wenn das erste vordefinierte Anzeigefenster auf einem Display (305) der Vorrichtung sichtbar ist, und das erste vordefinierte Anzeigefenster nicht sichtbar ist, wenn das zweite vordefinierte Anzeigefenster auf den Display (305) der Vorrichtung (300) sichtbar ist.

2. Datenverarbeitungsvorrichtung (300) nach Anspruch 1, wobei das erste vordefinierte Anzeigefenster und das zweite vordefinierte Anzeigefenster konfiguriert sind, jeweils individuell das gesamte Display (305) der Vorrichtung (300) einzunehmen.

3. Datenverarbeitungsvorrichtung (300) nach Anspruch 1, wobei:
das erste vordefinierte Anzeigefenster einen ersten Monat innerhalb einer grafischen Kalenderoberfläche umfasst, und das auswählbare grafische Element in dem ersten vordefinierten Anzeigefenster einen Kalendereintrag in dem ersten Monat innerhalb der grafischen Kalenderoberfläche umfasst; und
das zweite vordefinierte Anzeigefenster einen zweiten Monat innerhalb der grafischen Kalenderoberfläche umfasst, und das auswählbare grafische Element in dem zweiten vordefinierten Anzeigefenster einen Kalendereintrag in dem zweiten Monat innerhalb der grafischen Kalenderoberfläche umfasst.

4. Ein computerimplementiertes Verfahren zur Navigation mit einer Rollkugel (301) durch eine Vielzahl von grafischen Elementen innerhalb einer grafischen Benutzeroberfläche einer mobilen Vorrichtung, wobei die grafische Benutzeroberfläche eine logische Barriere umfasst, wobei das Verfahren umfasst:
Lokalisieren der logischen Barriere zwischen einem ersten vordefinierten Anzeigefenster und einem zweiten vordefinierten Anzeigefenster, wobei die logische Barriere konfiguriert ist, Bewegung einer Markierung von auswählbaren grafischen Element in dem ersten Anzeigefenster zu einem auswählbaren grafischen Element in dem zweiten vordefinierten Anzeigefenster als Reaktion auf eine Rollkugel-Eingabe zum Auswählen des auswählbaren grafischen Elements in dem zweiten vordefinierten Anzeigefenster vorübergehend zu verhindern, während das ausgewählte grafische Element in dem ersten vordefinierten Anzeigefenster markiert ist, wobei die logische Barriere die Bewegung der Markierung für eine ausgewählte Menge an Rotation der Rollkugel (301), gerichtet zu dem auswählbaren grafischen Element in dem zweiten vordefinierten Anzeigefenster vorübergehend verhindert, wobei das zweite vordefinierte Anzeigefenster nicht sichtbar ist, wenn das erste vordefinierte Anzeigefenster auf dem Display (305) der Vorrichtung sichtbar ist, und das erste vordefinierte Anzeigefenster nicht sichtbar ist, wenn das zweite vordefinierte Anzeigefenster auf den Display (305) der Vorrichtung (300) sichtbar ist.

5. Verfahren nach Anspruch 4, weiter umfassend:
Erkennen (401) einer Rollkugel-Bewegung mit einer vertikalen Komponente und einer horizontalen Komponente, wenn ein erstes Element ausgewählt ist;
Bestimmen (402-V), dass die Rollkugel-Bewegung eine im Wesentlichen vertikale Bewegung umfasst, wenn die vertikale Komponente größer ist als die horizontale Komponente; und
als Reaktion darauf, Auswählen entweder eines zweiten Elements, welches dem ersten Element (412) vertikal am nächsten ist, oder eines dritten Elements in derselben horizontalen Linie wie das zweite Element (413), wenn die Distanz zwischen einer äußerst linken horizontalen Koordinate des dritten Elements und einer äußerst linken horizontalen Koordinate des ersten Elements kleiner ist als die Distanz zwischen einer äußerst linken horizontalen Koordinate des zweiten Elements und der äußerst linken horizontalen Koordinate des ersten Elements.

6. Verfahren nach Anspruch 5, weiter umfassend:
Bestimmen (410), ob ein manuelles Überschreiben existiert (410-Ja), welches eine Bewegung (411) von dem ersten Element zu einem vierten Element als Reaktion auf die im Wesentlichen vertikale Bewegung definiert; und
Auswählen des vierten Elements als Reaktion auf das manuelle Überschreiben.

7. Verfahren nach Anspruch 5, weiter umfassend:
Erkennen einer im Wesentlichen horizontalen Bewegung (402-H) auf der Rollkugel (301), wenn das erste Element ausgewählt ist; und
Auswählen (409) eines Elements in derselben horizontalen Linie wie das erste Element, welches der Richtung der Rollkugel-Bewegung am nächsten ist.

8. Verfahren nach Anspruch 5, wobei Erkennen einer im Wesentlichen horizontalen Bewegung (402-H) umfasst:
Erkennen einer Rollkugel-Bewegung mit einer vertikalen Komponente und einer horizontalen Komponente und Bestimmen, dass die Bewegung eine im Wesentlichen horizontale Bewegung umfasst, wenn die horizontale Komponente größer ist als die vertikale Komponente.

9. Verfahren nach Anspruch 5, wobei die Elemente Texteingabefeld und/oder Dropdown-Menüelemente oder Dropdown-Menüelemente umfassen.

10. Datenverarbeitungsvorrichtung (300) zur Navigation innerhalb der grafischen Benutzeroberfläche nach einem der Ansprüche 1 bis 3, wobei die Datenverarbeitungsvorrichtung eine drahtlose, mobile Vorrichtung ist, und wobei:
das Display (305) zum Anzeigen der grafischen Benutzeroberfläche konfiguriert ist, eine Vielzahl von auswählbaren grafischen Elementen zu beinhalten;
die Rollkugel (301) für das Empfangen von Benutzereingaben zum Veranlassen von Bewegung zwischen den auswählbaren grafischen Elementen konfiguriert ist; und
der Prozessor zur Verarbeitung des Programmcodes konfiguriert ist, die folgenden Operationen durchzuführen:
Erkennen (401) einer Rollkugel-Bewegung mit einer vertikalen Komponente und einer horizontalen Komponente, wenn ein erstes Element einer Gruppe von grafischen Elementen ausgewählt ist; und
Bestimmen (402-V), dass die Rollkugel-Bewegung eine im Wesentlichen vertikale Bewegung umfasst, wenn die vertikale Komponente größer ist als die horizontale Komponente; und
als Reaktion darauf, Auswählen entweder eines zweiten Elements, welches dem ersten Element (412) vertikal am nächsten ist, oder eines dritten Elements in derselben horizontalen Linie wie das zweite Element (413), wenn die Distanz zwischen einer äußerst linken horizontalen Koordinate des dritten Elements und einer äußerst linken horizontalen Koordinate des ersten Elements kleiner ist als die Distanz zwischen einer äußerst linken horizontalen Koordinate des zweiten Elements und der äußerst linken horizontalen Koordinate des ersten Elements.

11. Datenverarbeitungsvorrichtung (300) nach Anspruch 10, umfassend zusätzlichen Programmcode, um den Prozessor zu veranlassen, die folgende Operationen durchzuführen:
Bestimmen (410), ob ein manuelles Überschreiben existiert (410-Ja), welches eine Bewegung (411) von dem ersten Element zu einem vierten Element als Reaktion auf die im Wesentlichen vertikale Bewegung definiert und
Auswählen des vierten Elements als Reaktion auf das manuelle Überschreiben.

12. Datenverarbeitungsvorrichtung (300) nach Anspruch 10, umfassend zusätzlichen Programmcode, um den Prozessor zu veranlassen, die folgende Operationen durchzuführen:
Erkennen einer zusätzlichen Rollkugel-Bewegung mit einer vertikalen Komponente und einer horizontalen Komponente, wenn das erste Element ausgewählt ist;
Bestimmen, dass die zusätzliche Rollkugel-Bewegung eine im Wesentlichen horizontale Bewegung (402-H) umfasst, wenn die horizontale Komponente größer ist als die vertikale Komponente; und
Auswählen (409) eines Elements in derselben horizontalen Linie wie das erste Element, welches der Richtung der zusätzlichen Rollkugel-Bewegung am nächsten ist.

13. Datenverarbeitungsvorrichtung (300) nach Anspruch 10, wobei die grafischen Elemente Texteingabefelder umfassen.

14. Datenverarbeitungsvorrichtung (300) nach Anspruch 10, wobei die grafischen Elemente Dropdown-Menüelemente umfassen.

15. Computerlesbares Medium mit darauf gespeichertem Programmcode, welcher, wenn mittels eines Computers ausgeführt, den Computer veranlasst, das Verfahren nach einem der Ansprüche 4 bis 9 auszuführen.

## Revendications

1. Dispositif de traitement de données (300) ayant une mémoire pour stocker un code de programme et un processeur pour traiter le code de programme afin de générer une interface utilisateur graphique (GUI) afin de naviguer dans la GUI, la GUI comprenant :
une première fenêtre d'affichage prédéfinie ;
une seconde fenêtre d'affichage prédéfinie ; et
une barrière logique entre la première fenêtre d'affichage prédéfinie et la seconde fenêtre d'affichage prédéfinie, la barrière logique étant configurée pour empêcher momentanément le déplacement d'une accentuation d'un élément graphique sélectionnable dans la première fenêtre d'affichage prédéfinie à un élément graphique sélectionnable dans la seconde fenêtre d'affichage prédéfinie à la suite d'une entrée sur une boule roulante pour sélectionner l'élément graphique sélectionnable dans la seconde fenêtre d'affichage prédéfinie tandis que l'élément graphique sélectionné dans la première fenêtre d'affichage prédéfinie est accentuée, la barrière logique étant en outre configurée pour empêcher momentanément le déplacement de l'accentuation sur une quantité spécifiée de rotation de la boule roulante (301) dirigée vers l'élément graphique sélectionnable dans la seconde fenêtre d'affichage prédéfinie, dans lequel la seconde fenêtre d'affichage prédéfinie n'est pas visible lorsque la première fenêtre d'affichage prédéfinie est visible sur un affichage (305) et la première fenêtre d'affichage prédéfinie n'est pas visible lorsque la seconde fenêtre d'affichage prédéfinie est visible sur l'affichage (305) du dispositif (300).

2. Dispositif de traitement de données (300) selon la revendication 1, dans lequel la première fenêtre d'affichage prédéfinie et la seconde fenêtre d'affichage prédéfinie sont configurées pour occuper chacune individuellement la totalité de l'affichage (305) du dispositif (300).

3. Dispositif de traitement de données (300) selon la revendication 1, dans lequel :
la première fenêtre d'affichage prédéfinie comprend un premier mois dans une interface calendaire graphique et l'élément graphique sélectionnable dans la première fenêtre d'affichage prédéfinie comprend une entrée calendaire dans le premier mois dans l'interface calendaire graphique ; et
la seconde fenêtre d'affichage prédéfinie comprend un second mois dans l'interface calendaire graphique et l'élément graphique sélectionnable de la seconde fenêtre d'affichage prédéfinie comprend une entrée calendaire dans le second mois dans l'interface calendaire graphique.

4. Procédé mis en oeuvre par ordinateur pour naviguer avec une boule roulante (301) à travers une pluralité d'éléments graphiques dans une interface utilisateur graphique d'un dispositif mobile, dans lequel l'interface utilisateur graphique comprend une barrière logique, le procédé comprenant les étapes consistant à :
localiser la barrière logique entre une première fenêtre d'affichage prédéfinie et une seconde fenêtre d'affichage prédéfinie, la barrière logique étant configurée pour empêcher momentanément le déplacement d'une accentuation d'un élément graphique sélectionnable dans la première fenêtre d'affichage prédéfinie à un élément graphique sélectionnable dans la seconde fenêtre d'affichage prédéfinie à la suite d'une entrée de boule roulante pour sélectionner l'élément graphique sélectionnable dans la seconde fenêtre d'affichage prédéfinie tandis que l'élément graphique sélectionné dans la première fenêtre d'affichage prédéfinie est accentué, la barrière logique empêchant momentanément le déplacement de l'accentuation sur une quantité spécifique de rotation de la boule roulante (301) dirigée vers l'élément graphique sélectionnable dans la seconde fenêtre d'affichage prédéfinie, dans lequel la seconde fenêtre d'affichage prédéfinie n'est pas visible lorsque la première fenêtre d'affichage prédéfinie est visible sur l'affichage (305) du dispositif et la première fenêtre d'affichage prédéfinie n'est pas visible lorsque la seconde fenêtre d'affichage prédéfinie est visible sur l'affichage (305) du dispositif (300).

5. Procédé selon la revendication 4, comprenant en outre les étapes consistant à :
détecter (401) un mouvement de la boule roulante ayant une composante verticale et une composante horizontale lorsqu'un premier élément est sélectionné ;
déterminer (402-V) que le mouvement de la boule roulante comprend un mouvement sensiblement vertical lorsque la composante verticale est plus grande que la composante horizontale ; et
sélectionner en réponse un deuxième élément qui est le plus proche verticalement du premier élément (412) ou un troisième élément sur la même ligne horizontale que le deuxième élément (413) si la distance entre une coordonnée horizontale la plus à gauche du troisième élément et une coordonnée horizontale la plus à gauche du premier élément est inférieure à la distance entre une coordonnée horizontale la plus à gauche du deuxième élément et la coordonnée horizontale la plus à gauche du premier élément.

6. Procédé selon la revendication 5, comprenant en outre :
la détermination (410) si une prise de contrôle manuelle existe (410-Oui) définissant un mouvement (411) du premier élément à un quatrième élément en réponse au mouvement sensiblement vertical ; et
la sélection du quatrième élément en réponse à la prise de contrôle manuelle.

7. Procédé selon la revendication 5, comprenant en outre :
la détection d'un mouvement sensiblement horizontal (402-H) sur la boule roulante (301) lorsque le premier élément est sélectionné ; et
la sélection (409) d'un élément sur la même ligne horizontale que le premier élément qui est le plus proche de la direction du mouvement de la boule roulante.

8. Procédé selon la revendication 5, dans lequel la détection d'un mouvement sensiblement horizontal (402-H) comprend :
la détection d'un mouvement de la boule roulante ayant une composante verticale et une composante horizontale et la détermination que le mouvement comprend un mouvement sensiblement horizontal si la composante horizontale est plus grande que la composante verticale.

9. Procédé selon la revendication 5, dans lequel les éléments comprennent des champs de saisie de texte et/ou des éléments de menu déroulant ou des éléments de menu déroulant.

10. Dispositif de traitement de données (300) pour naviguer avec l'interface utilisateur graphique selon l'une quelconque des revendications 1 à 3, dans lequel le dispositif de traitement de données est un dispositif mobile sans fil et dans lequel :
l'affichage (305) pour afficher l'interface utilisateur graphique est configuré pour comprendre une pluralité d'éléments graphiques sélectionnables ;
la boule roulante (301) est configurée pour recevoir une entrée utilisateur afin de provoquer un mouvement entre les éléments graphiques sélectionnables ; et
le processeur pour traiter le code de programme est configuré pour effectuer les opérations consistant à :
détecter (401) un mouvement de la boule roulante ayant une composante verticale et une composante horizontale lorsqu'un premier élément d'un groupe d'éléments graphiques est sélectionné ; et
déterminer (402-V) que le mouvement de la boule roulante comprend un mouvement sensiblement vertical lorsque la composante verticale est plus grande que la composante horizontale ; et
sélectionner en réponse un deuxième élément qui est le plus proche verticalement du premier élément (412) ou un troisième élément sur la même ligne horizontale que le deuxième élément (413) si la distance entre une coordonnée horizontale la plus à gauche du troisième élément et une coordonnée horizontale la plus à gauche du premier élément est inférieure à la distance entre une coordonnée horizontale la plus à gauche du deuxième élément et la coordonnée horizontale la plus à gauche du premier élément.

11. Dispositif de traitement de données (300) selon la revendication 10, comprenant un code de programme supplémentaire pour amener le processeur à effectuer les opérations consistant à :
déterminer (410) s'il existe une prise de contrôle manuelle (410-Oui) définissant un mouvement (411) du premier élément à un quatrième élément en réponse au mouvement sensiblement vertical et
sélectionner le quatrième élément en réponse à la prise de contrôle manuelle.

12. Dispositif de traitement de données (300) selon la revendication 10, comprenant un code de programme supplémentaire pour amener le processus à effectuer les opérations consistant à :
déterminer un mouvement supplémentaire de la boule roulante ayant une composante verticale et une composante horizontale lorsque le premier élément est sélectionné ;
déterminer que le mouvement supplémentaire de la boule roulante comprend un mouvement sensiblement horizontal (402-H) lorsque la composante horizontale est plus grande que la composante verticale ; et
sélectionner (409) un élément sur la même ligne horizontale que le premier élément qui est le plus proche de la direction du mouvement supplémentaire de la boule roulante.

13. Dispositif de traitement de données (300) selon la revendication 10, dans lequel les éléments graphiques comprennent des champs de saisie de texte.

14. Dispositif de traitement de données (300) selon la revendication 10, dans lequel les éléments graphiques comprennent des éléments de menu déroulant.

15. Support lisible par ordinateur ayant un code de programme qui y est stocké et qui, lorsqu'il est exécuté par un ordinateur, amène l'ordinateur à effectuer le procédé selon l'une quelconque des revendications 4 à 9.
